# EUROPEAN PATENT SPECIFICATION

(11) **EP 2 566 350 B1**
(45) Date of publication and mention of the grant of the patent: **04.05.2016**
(21) Application number: 11723103.5
(22) Date of filing: 04.05.2011
(51) Int. Cl.: A23L 21/12, A23L 19/00, A23L 33/10, A23L 23/00

(54) **EDIBLE COMPOSITIONS AND METHODS OF MANUFACTURING EDIBLE COMPOSITIONS**
ESSBARE ZUSAMMENSETZUNGEN UND VERFAHREN ZUR HERSTELLUNG VON ESSBAREN ZUSAMMENSETZUNGEN
COMPOSITIONS COMESTIBLES ET PROCÉDÉS DE FABRICATION DE COMPOSITIONS COMESTIBLES

(30) Priority: 08.09.2010 GB 201014956; 16.07.2010 GB 201011961; 20.05.2010 GB 201008449; 05.05.2010 GB 201007500
(43) Date of publication of application: 13.03.2013
(73) Proprietor: St. Giles Foods Limited, Sidcup Kent DA15 7AA (GB)
(72) Inventor: MUSSAWIR-KEY, Frederick Wade, Erith, Kent DA8 2JA (GB)
(74) Representative: Sales, Robert Reginald
(86) International application number: PCT/GB2011/000676
(87) International publication number: WO 2011/138579

(56) References cited:
- WO-A1-2004/112502
- WO-A1-2007/124993
- WO-A2-2007/008384
- WO-A2-2007/125525
- US-A1- 2006 182 820

## Description

The present invention relates to edible compositions and methods of manufacturing edible compositions, in particular compositions based on fruit and/or vegetable matter.

According to the present invention, there is provided an edible composition comprising tomato ketchup, the edible composition having a base comprising fruit and/or vegetable matter with a fibrous matrix and a water immiscible nutritional supplement held within the fibrous matrix, the nutritional supplement comprising an oil, the oil being rich in Omega 3 fatty acids, characterised in that the nutritional supplement is in the form of droplets, the majority of which have an external diameter of less than 30 microns.

The term "nutritional supplement" is used in the context of the present invention to mean one or more substances, which can be naturally occurring or synthetic, that provide nutritional and/or health benefits, and/or therapeutic benefits (such as essential fatty acids, oils or oil-like substances of particular nutritional or therapeutic value, vitamins, minerals and salts, minerals/salt compounds) and that are missing or are otherwise not present or consumed in sufficient quantities in the diet of certain persons or animals. Such supplements are typically not classified as regulated pharmaceuticals, but the provision of nutritional supplements that are regulated pharmaceuticals is within the scope of the present invention. In the present specification the term nutritional supplements includes substances that may otherwise be termed functional supplements, dietetic supplements and nutraceutical supplements.

The term "water immiscible" is used in the context of the present invention to mean the general inability to form a solution with water, particularly at temperatures up to 30°C, but up to 60°C in certain embodiments, and includes liquid/liquid immiscibility and immiscibility between other phases, such as solid/liquid.

The fibrous matrix may comprise dietary fibre and may comprise natural insoluble fibres from fruit and/or vegetables. The fibrous matrix may be plant-derived and may comprise primarily cellulose, but may comprise one or more of hemicellulose and/or lignin. Alternatively or in addition the fibrous matrix may comprise soluble fibres such as pectin and/or gum and/or other non-starch polysaccharides, particularly oligosaccharides.

The base is preferably aqueous. The base may comprise matter suspended in an aqueous liquid. The aqueous liquid may comprise the juice of the fruit(s) and/or vegetable(s). The aqueous liquid may comprise the juice of one or more different fruit(s) and/or vegetable(s). The matter may comprise one or more of pulped, comminuted, mashed, blended, crushed, mushed, shredded, natural state, peeled, cored, de-seeded, pre-pureed and/or grated fruit(s) and/or vegetable(s). The base may comprise the pulp of one or more fruit(s) and/or vegetable(s) mixed or suspended in the aqueous liquid. One or more of the fruit(s) and/or vegetable(s) may be fresh, raw, chemically preserved, such as by SO₂, pasteurised, sterilised, canned, frozen, chilled, dried, dehydrated or otherwise preserved. One or more of the fruit/vegetables may be heat treated prior to being peeled, such as by the hot pack/break process, to reduce or deactivate enzyme activity.

The base may comprise additives such as one or more of water, antioxidants (such as Vitamin E (tocopherol), ascorbyl palmitate, BHA, BHT, BHQ, ascorbic acid and/or its salts), preservatives, flavourings, seasonings, colourants, sweeteners, acidity regulators, thickeners, stabilisers, chelating agent, vitamins, Vitamin C, vinegars, acidity regulators, salt, sugar (raw, refined and/or partly refined), fructose, fructose syrup, inulin, oligofructose, polysaccharides, glucose, molasses, fruit juice concentrates and other permitted additives. The base may be concentrated, such as by evaporation or otherwise, to reduce the natural water content.

The base may comprise more than 0.5g of fibrous matrix per 100g and in certain embodiments comprises more than 3g of fibrous matrix per 100g and in others between 3g and 5g per 100g. The base may comprise 0.15g to 2.5g of fibrous matrix per 100g and may be 0.4g to 1.7g of fibrous matrix per 100g.

The composition is preferably liquid or semi-liquid, although it may be non-liquid in certain embodiments.

The nutritional supplement may be comprised wholly or substantially wholly of oil or may be primarily of oil to be generally or mainly immiscible in the aqueous base. The nutritional supplement may be oil soluble and/or oil solublisable.

Droplets of the nutritional supplement are physically retained in the fibrous matrix of the matter. This has a number of advantages. It enables the generally or mainly immiscible nutritional supplement to be held suspended/retained within the composition with relatively little movement of the supplement, thus preventing or at least significantly hindering separation and the natural tendency for the nutritional supplement to float to the surface of the liquid of the base. This provides the compositions with good storage properties and shelf lives. It also enables the nutritional supplement to be dispersed within the base without the need to reduce the droplet size to such an extent as to form an emulsion, which tends to introduce a milkiness (turbidity) or cloudiness to the composition, often considered unattractive to consumers. It also acts to mask the presence of the nutritional supplement within the composition, thus masking or partly masking any unattractive qualities of certain nutritional supplements, such as adverse taste, visual and/or smell qualities.

The nutritional supplement may also comprise one or more oils and/or oily substances containing and preferably rich in nutritional, functional and/or nutraceutical agents such as one or more of unsaturated or partly unsaturated fatty acids, in particular polyunsaturated fatty acids, partly saturated fatty acids, fatty acid esters, oils and/or oily substances derived from one or more of plant sources (such as linseed, hemp, rapeseed, tall, sesame, flax, chia, safflower, wood oil CLA, pine oil CLA, rice, wheat, soya (and soya germ), other seeds, animal sources (such as fish, krill) or other organism sources (such as algae, micro-algae), L-carnitine.

Omega 3 fatty acids may include ALA (alpha linoleic acid) and DHA (docosahexaenoic acid), conjugated linoleic acid (CLA) and its isomers,

The oils and oily substances, and particularly those with relatively pungent or otherwise undesirable odours, tastes, colours and the like such as those sourced from marine organisms (such as fish, krill and marine algae), may be refined, fractionated, deflavourised and/or deodorised.

In certain embodiments the nutritional supplement comprises one or more substances from both aquatic/marine sources such as fish, krill, algal and non-aquatic/marine sources such as seeds, whereby the odour and taste of the aquatic/marine substance(s) are diluted.

Such nutritional supplements may comprise between 0.005% and 5% by weight of the composition. The nutritional supplements may comprise between 0.01% and 5%, and in other embodiments between 0.1 % and 3% by weight of the composition. In certain embodiments the nutritional supplement constitutes between 0.05% and 1% by weight of the composition. In certain embodiments the supplement constitutes between 0.1% and 0.5% by weight of the composition.

The nutritional supplement may comprise one or more of phytosterols (including their esters), phytostanols (including their esters), mineral supplements, organomineral supplements, organometal supplements, antioxidants and suchlike, which are preferably provided in oil and/or oily substances that may be naturally rich therein. The nutritional supplements may be in their natural form, modified and/or synthetic form.

The composition may comprise one or more substances that act to reduce the natural melting temperature of the nutritional supplement. For example, medium chain tryglycerides and/or sunflower oil may be provided within the composition to act to reduce the melting point of the nutritional supplement, particularly oil-based nutritional supplements, which otherwise would be waxy or solid at normal usage temperature at least in the range of 10°C to 25°C approximately.

The nutritional supplement may comprise one or more water insoluble or partially soluble solids, instead of or in addition to the aforesaid oil and oil-based supplement. Such solid(s) may include one or more of minerals, salts, oxides, including those containing calcium compounds and/or magnesium compounds such as calcium phosphate, di-calcium phosphate, calcium sulphate and calcium carbonate (usually in non-acidic media), dolomite, ancient corals, ancient marine creatures, skeletal deposit sediments, bone and/or other similar minerals and salts. The solids may be finely divided in powder or other small particulate form.

Such solid nutritional supplements may be retained in and by the fibrous matrix of the matter. This has a number of advantages. Such solids would normally tend to gravitate downwards or precipitate within a liquid medium, but the retention within the fruit and/or vegetable matter helps to prevent such gravitation or precipitation. This provides the compositions of the invention with relatively good storage properties and long shelf life. The presence of the solids is generally masked by the fibrous matrix. It is also the case that such solid nutritional supplements tend to have few or less pungent generally considered adverse flavour characteristics than some soluble counterparts, offering less potential for their presence to detract from the attractiveness of the composition for consumption. Such solid forms are also typically cheaper and/or more practically usable than their soluble counterparts, have generally better storage characteristics and have generally better stablility against undesirable deterioration.

Such solid nutritional supplements could typically comprise between 0.05% and 5.0% by weight of the composition. The solid nutritional supplements may comprise between 0.01% and 3.90% by weight of the composition. In certain embodiments the solid nutritional supplement may comprise between 0.4% and 3% by weight of the composition, and in others between 0.05% and 1% by weight and others between 0.1% and 0.5% by weight.

The nutritional supplement may be present on or in a carrier substrate, which may be water soluble or water dispersible and may comprise one or more of vegetable gum, acacia gum, gelatine, gum arabic, methyl cellulose gum, soluble cellulose, starch, sugar, glucose, maltodextrin, dextrin, casein, milk powder, skimmed milk powder, soya milk, soya milk powder, soya protein, plant protein, legume seed protein and the like. The carrier may be soluble in the base.

A thickening and/or stabilising agent may be used to increase the viscosity of the base and to give the product the desired texture. This has the advantage of further hindering movement of the nutritional supplement retained by the fibrous matrix.

Additional edible fibre and/or hydrocolloid, in particular plant derived fibre and hydrocolloid, can be used to provide stabilisation and/or thickening of the composition to give the product the desired texture. Divalent anion soluble salts such as calcium chloride, magnesium sulphate and calcium gluconate can be added to help cross-link certain hydrocolloids such as some pectins in the composition to increase the thickening and/or gelling properties.

According to a second aspect of the present invention, there is provided a method of manufacturing an edible composition comprising tomato ketchup, the method comprising dispersing a water immiscible nutritional supplement comprising an oil, the oil being rich in Omega 3 fatty acids, in a base comprising fruit and/or vegetable matter with a fibrous matrix to retain the water immiscible nutritional supplement within the structure of the fibrous matrix, characterised in that the nutritional supplement is dispersed within the composition to form droplets, the vast majority of droplets having a diameter of less than 30 microns.

The nutritional supplement may be dispersed, such as by mixing, within the base, preferably to be generally evenly distributed throughout, preferably using a mechanical mixer such as a turbine-type motorised mixer, like a Silverson mixer, rotating blade(s) mixers, whisks, pressure/jet mixers, in-line or pipeline connected mixers, other suitable mixing devices including both mechanised and manually/hand operated devices.

The base may comprise most if not all of the desired ingredients of the composition, other than the nutritional supplement. The nutritional supplement may be gently mixed into the base to prevent the droplet size of oily supplement from becoming so small as to impart an undesirable visual appearance to the composition, such as a milky, turbid or cloudy appearance to the composition. Alternatively, the nutritional supplement can be mixed into the base at relatively high speeds for a relatively short period of time. Such appearances are found to detract from the attractiveness of the composition to a typical consumer, particularly where the concentration of insoluble oily matter is relatively high (above 0.5%), particularly for products that the typical consumer would normally associate with fruits and/or vegetables and which therefore they would not ordinarily expect to have a cloudy or milky appearance, such as tomato ketchup and brown sauce.

Any added thickeners and/or stabilisers may be mixed in the base prior to dispersion of the nutritional supplement to the base.

The nutritional supplement may be introduced to the base in the form of an oil-and-water emulsion, which may comprise an emulsifier. The oil of the emulsion may consist wholly or substantially wholly of the nutritional oil of the supplement, or in alternative embodiments further oil may be provided. In embodiments where the nutritional supplement is not oil or oil-based, the oil of the emulsion may comprise a carrier oil such as one or more plant and/or animal derived oils.

The nutritional supplement may be introduced to the base in alcohol, polyol or in an alcohol-based solution.

The nutritional supplement may be introduced to the base in the form of one or more saponified nutritional oil or oils. Such saponified oil(s) may be produced by reacting the oil or fatty acid(s) within the oil with an alkaline substance, such as potassium hydroxide and/or potassium carbonate. When the saponified oil is then mixed with acidity within the composition, the saponification is reversed to release the nutritional oil fatty acids. Introducing the nutritional oil in saponified form helps to integrate the oil into the wholly or predominantly aqueous base.

The or one or more of the nutritional oils in the nutritional supplement may be in the form of fatty acids, typically the nutritionally functional component of the oil(s).

The nutritional supplement may be presented on or in a carrier substrate, such as on or in particles, flakes or granules of gelatine, soya, plant protein, legume seed protein, casein, milk powder, skimmed milk powder, soya milk, soya milk powder, soya protein, vegetable gum, acacia gum, gum arabic, dextrin, methyl cellulose gum, soluble cellulose, starch, sugar, glucose, maltodextrin and suchlike, that is preferably generally soluble within the base. The nutritional supplement may be presented on a carrier such as caseine, which may be in the form of fine particles and which are not soluble in the base when precoagulated by acidification, for example.

The nutritional supplement may be added to the base as an admix or premix of supplement and carrier substrate as a solution, suspension (such as a suspension of fine powder acidulated caseine encapsulated nutritional oil) and/or as an emulsion (such as an emulsion of nutritional oil or diluted nutritional oil emulsified in an aqueous medium).

The method may involve the use of a base as described above.

The method may substantially involve the use of a nutritional supplement as described above.

The method may involve a step to remove dissolved and/or entrapped air within the composition. This helps to preserve oil(s) within the composition against undesirable oxidation, mitigate against the development of cloudiness of the composition and potential disturbance of oil droplets and/or retained supplement particles by the air gradually tending to ascend to the surface of the base. Such a step may involve heating, vacuum treatment and/or flushing with generally oxygen-free and/or oxygen depleted gas and/or steam.

US2006/182820 discloses a composition in the form of a homogeneous dispersion that includes citrus pulp and a plant sterol, omega-3-oil, and/or isoprenoid. The dispersion may be incorporated in foods and beverages.

WO2007/125525 discloses cheese-like and cold cut slice edible products comprising: a) casein; b) homogeneously dispersed fruit and/or vegetable matter; c) oil; d) starch; e) at least one emulsifier; f) seasoning; and, g) optionally, water. A process for the manufacture of the edible products is also described.

WO2007/008384 discloses food articles comprising delivery devices. Methods of preparing such food articles are also disclosed.

WO2004/112502 discloses a stabilized fruit pulp. The stabilized fruit pulp has not been subjected to temperatures that exceed 90 degrees centigrade, has substantially no active polypenol oxidase, and is suitable for use in puree compositions that can be used in dressings, dips and spreads.

WO2007/124993 discloses a method of manufacturing microbiologically stable edible products containing fruit and a source of omega-3 polyunsaturated fatty acids, such as fish-oil, which method allows for these products to be easily manufactured and wherein the obtained product does not develop an objectionable off-flavour when stored in a refrigerator for up to several weeks. A manufacturing process is also disclosed in which a source of omega-3 polyunsaturated fatty acids is pre-mixed with a fruit component, following which this pre-mix is added to a previously pasteurised or sterilised protein base (e.g. yogurt or milk).

Embodiments of the present disclosure will now be described by way of example only.

There are provided edible compositions and methods of manufacturing edible compositions, in particular compositions based on pulpy fruit and/or vegetable matter.

The edible compositions comprise a base comprising fruit and/or vegetable matter with a fibrous matrix and a water immiscible nutritional supplement held within, including on the surfaces of the fibrous matrix.

The edible compositions of the present disclosure are typically comprised of one or more fruits and/or vegetables and although the compositions are typically liquid or semi-liquid, they can be generally non-liquid. Examples of liquid and semi-liquid edible compositions of the present disclosure are tomato sauces, tomato ketchups, other condiment or table sauces such as brown sauce, steak sauce, fruit and/or vegetable based cooking sauces, relishes, dressings, chutneys, chutney sauces, concentrates, pastes, spreads, conserves and the like, soups and beverages. Examples of generally non-liquid compositions according to the present disclosure include fruit/vegetable pastes, preserves, jams, conserves, purees.

The types and varieties of fruits and vegetables that can be used in the compositions of the present disclosure are preferably those that have a sufficiently fibrous/pulpy composition to provide the fibrous matrix, such as tomatoes, apples, plums, mangoes, pumpkins, pomegranate, beetroot, grapes, peaches, apricots, dates, potato, wheat, rice, cereals, banana, strawberry, raspberry, celery, carrots and many others. They can be used either in the natural state or treated or preserved such as dried or cooked. It is the natural fibrous matter found in the fruits and or vegetables that provide the important fibrous matrix for the present disclosure. Although the precise composition of the fibrous matrix will be determined by the fruits and/or vegetables used in a particular composition, and to some extent the way those fruits and/or vegetables are processed, the fibrous matrix of the compositions typically comprise both soluble and insoluble dietary fibre. The insoluble fibre typically comprises primarily cellulose and can comprise hemicellulose and/or lignins. The soluble fibre typically comprises pectin and can comprise gum and/or other non-starch polysaccharides and oligosaccharides. Both the insoluble and soluble fibres in the fibrous matrix contribute to the retention of the nutritional supplement. The soluble fibres are understood to act as soft gels or thyxotropes that act to resist movement of the nutritional supplement, facilitating entrapment and retention of the supplements within the base.

Typically, all or most associated skin, cores, seeds and suchlike would be removed before pulping, although it will be appreciated that the extent these need or are desired to be removed can depend upon the fruit/vegetable concerned and the product being made.

The type and variety of fruit and/or vegetable used for a particular composition will be chosen according to the nature of the composition to be produced. For example, to produce a tomato sauce or tomato ketchup, the fruits used would be predominantly tomatoes, although of course additional fruits and/or vegetables as well as further ingredients would typically be incorporated to achieve the desired composition.

The base is formed by processing the fruit and/or vegetables to such an extent as to provide a pulpy fibrous matrix to hold the nutritional supplement, as will be explained. The fruits and/or vegetables may be pulped, comminuted, shredded, blended, mushed, mashed, crushed, grated or otherwise reduced to form a base which, as said before, would typically be liquid or semi-liquid, or could be substantially non-liquid. Typically, fruits and vegetables contain significant amounts of water, although the actual amount as a percentage of weight varies between types and varieties and can vary within varieties. This is particularly so for fruits/vegetables in their natural state. However, typically, when pulped, they become generally liquid or semi-liquid if the amount of water is sufficient. The water inherent or naturally present within the fruits and/or vegetables typically provides the aqueous properties of the base, although further water or water-based liquids such as vinegar, stock, salt solution, sugar solution, sweetened solutions and the like can be added if required. When dried fruit/vegetables are used, for example, the amount of water present within the dried fruit/vegetable may need to be supplemented with added water to provide the desired consistency and aqueous presence. In other embodiments the amount of inherent or naturally occurring water in the fruits/vegetables may need to be reduced to provide the base with the desired overall viscosity. Conventional processes such as evaporation and evaporation with vacuum, concentration by cooking, boiling, boiling under reduced pressure conditions, or any other suitable process or method can be used.

Additional edible fibre and/or hydrocolloid, in particular plant derived fibre and hydrocolloid, can be used to provide stabilisation and/or thickening of the composition to give the product the desired texture. Divalent anion soluble salts such as calcium chloride, magnesium sulphate and calcium gluconate can be added to help cross-link certain hydrocolloids such as some pectins in the composition to increase the thickening and/or gelling properties.

Due to the aqueous nature of the base of certain embodiments of the present disclosure, the addition of a water immiscible nutritional supplement would be expected to present difficulties of separation between the base and the nutritional supplement, but the present disclosure cleverly uses the fibrous matrix of the fruit/vegetable matter to help prevent separation and to retain the water immiscible nutritional supplement in a dispersed condition within the base, by holding the water immiscible nutritional supplement within the fibrous matrix. The nutritional supplement is generally physically retained by the architecture of the fibrous matrix, being typically entrapped within the mesh or network of fibres that make up the architecture of the fibrous matrix. This retention hinders the movement of the nutritional supplement, thus hindering the natural tendency to separate. The level of fibre from the fruit/vegetable pulp therefore needs to be sufficiently high for these beneficial effects to be appreciated and it has been found that the base would typically comprise more than 0.5g of fibrous matrix per 100g of base. In certain embodiments the base would comprise more than 3g of fibre matrix per 100g of base and in others between 3g and 5g per 100g. In particular embodiments the base would comprise between 0.15g and 2.5g of fibre matrix per 100g of base and in others between 0.4g and 1.7g of fibre matrix per 100g of base. In certain embodiments the amount of fibrous matrix may comprise the total fibre content in the base.

The fibre content can be determined by the AOAC (2000) enzymatic gravimetric method (Prosky (985-29)), or any other suitable analytical method.

In preferred embodiments the compositions comprise oil or oil-based nutritional supplements. The nutritional supplement can be oil soluble and/or oil solublisable. The disclosure also provides for water insoluble, partly soluble and/or poorly soluble nutritional supplements that can be considered to be immiscible or only partially immiscible in water.

For oil or oil-based nutritional supplements, droplets of the nutritional supplement are physically retained in the fibrous matrix of the fruit/vegetable matter. As indicated previously, it enables the generally immiscible nutritional supplement to be retained within the composition with relatively little movement of the supplement, thus preventing or at least significantly hindering separation and the natural tendency for the nutritional supplement to float to the surface or sink toward the bottom of the base. This provides the composition with good storage properties and shelf life. This also helps to prevent the need for the oil droplets to be reduced to such a small size that a milky or cloudy or other undesirable discolouration of the composition is introduced as the oil droplets act to deflect light to such an extent to introduce such an effect, which are generally considered unattractive to consumers, particularly where the consumer has a preconceived concept of how a product should appear. For example, a consumer typically expects a tomato ketchup to have a deep red, fairly translucent tomato colour and not to have any milky, cloudy or possibly pinkish discolouration or any oil floating at or near the top or sedimented at or near the bottom of the container. In the compositions of the present disclosure nearly all (99%) of droplets dispersed in the composition have a diameter of less than 30 microns, with between 85% and 90% having a diameter of between 5 and 10 microns.

A further advantage of the present disclosure is that the presence of the nutritional supplement within the composition is masked in the sense of its presence being disguised, thus helping to mask any unattractive qualities of the nutritional supplement, such as adverse taste, visual and/or smell qualities.

In particular embodiments the nutritional supplement comprises one or more oils or oily substances, such as unsaturated and partly unsaturated fatty acids including polyunsaturated fatty acids, Omega 3 fatty acids including ALA (alpha linoleic acid) and DHA (docosahexaenoic acid), gamma, linoleic acid (long and/or short chain), conjugated linoleic acid, phytosterols, phytostanols, including such substances isolated or carried in an oil, in particular their natural source oil such as fish oil, linseed oil, walnut oil, starflower oil, evening primrose oil, safflower oil.

Such oils have well documented health and nutritional benefits. Omega 3 fatty acids in fish oil and gamma linoleic acid contained in starflower oil seed for example cannot be produced by the human body and so introducing them into the diet as a nutritional supplement is generally beneficial. Typical sources of long chain Omega 3 fatty acids such as ALA include fish oils, krill oils and algae oils, including fermented algal oils. Typically, such marine-derived oils have a taste and odour that would not typically be considered complementary to a traditional fruit/vegetable based product, but when added in relatively small amounts, the inherent taste/odour may be adequately masked by the base. Safflower oil, linseed, flax, hemp, rapeseed and sesame oils are examples of sources of short chain Omega 3 oils and rich plant derived oils, which would preferably be refined, deflavourised and deodorised. Other oils that can be comprised in the nutritional supplement are canola oil, pumpkin seed oil, wheatgerm oil, rice germ oil, borage seed oil, blackcurrant seed oil, evening primrose seed oil. Where the nutritional supplement has perceptible undesirable properties such as undesirable taste/odour properties, they can be refined, deflavourised and/or deodorised to a satisfactory level to remove or satisfactorily reduce the undesirable effect. Different oils can be blended or used together to help address any undesirable taste, smell or other properties that may put a potential consumer off consuming the composition. For example, fish or micro-algal oils rich in Omega 3 fatty acids tend to have "fishy" taste and smell characteristics and so to reduce the impact of these characteristics such oils can be diluted or complemented with one or more Omega 3 rich oils that do not exhibit such taste and smell characteristics, such as Omega 3 fatty acid rich seed oils like those of rapeseed, canola and others, to bring the overall taste and smell characteristics of the finished product to an acceptable level. The nutritional supplement can also be treated to remove known allergens, such as for example, EPA (eicosapentaenoic acid)/DHA (docosahexaenoic acid) containing fish oil can contain one or more fish (protein) allergen and in compositions of the present disclosure the oil is so highly refined and distilled that the fish protein allergen is no longer detectable or otherwise at an acceptable allergen level.

Seed oils may also be used as a source of nutritional supplement, such as linseed oil, flax oil, hemp oil, rapeseed and sesame oil, and as indicated above would preferably be refined and/or deodorised before use.

In certain embodiments the nutritional supplement could comprise one or more of other oil-like substances such as phytosterols, phytostanols, oil soluble and oil solublisable minerals and organomineral supplements, organometal supplements, conjugated linoleic acids, lutein, licopene, probiotics such as inulin and others, either alone or in addition to other substances disclosed herein.

The composition may comprise further components such as one or more of additional water, antioxidants including rosemary extract, Vitamin E (tocopherol), ascorbyl palmitate, BHA, BHT and BHQ, ascorbic acid and/or its salts (amongst others), preservatives, flavourings, colourants, sweeteners, acidity regulators, thickeners, stabilisers, chelating agent, Vitamin C, gelling agents, agar-agar, carrageenan, alginate, pectin, calcium and/or magnesium salts, vinegars, salt, sugar (raw, refined and/or partly refined), fructose, fructose syrup, inulin, oligofructose, molasses, fruit juice concentrates, polysaccharides, glucose, dairy products such as skimmed or partly skimmed milk, whey, buttermilk, yoghurt, soya and soya products such as soya protein, soya milk and suchlike. Such further components may be used in their natural state and/or in modified or derivative form.

Typically, the oil or oil-based nutritional supplement comprises between 0.005% and 5% by weight of the composition. In particular embodiments, such nutritional supplement comprises between 0.01% and 5% and in others between 0.1 % and 3% by weight of the composition. For example, where the nutritional supplement comprises oils that are naturally relatively low in the relevant nutrient, nutraceutical, etc, such as seed oils like rapeseed and flax oils that are relatively low in the nutrient DHA (docosahexaenoic acid) up to 5%, such as 1% to 5% of supplement may be present. In other more nutrient/nutraceutical rich supplements such as fish oil and micro-algae oil, which are relatively rich in DHA, the supplement may comprise 0.05% to 1% by weight of the composition in certain embodiments and between 0.1 % and 0.5% in others.

In certain embodiments the nutritional supplement may comprise substances from a number of different sources to provide a blend of nutritional substances. Further, the source of the supplements can be selected according to desired odour and/or taste characteristics of the edible composition. For example, nutritional oils derived from aquatic or marine sources tend to have a marine or fishy taste and smell which can be considered undesirable, deterring a potential consumer from ingesting the composition. To help reduce the level of such taste and odour characteristics, nutritional substances from such sources (and other sources that exhibit undesirable organoleptic properties) can be complemented with one or more substances from other sources that are not generally considered to exhibit such undesirable taste and/or smell characteristics, thus enabling the amount of the aquatic or marine (etc) sourced substances to be reduced to a more acceptable level. In certain embodiments seed oils such as that of rapeseed is used alongside fish and/or algal oils to help dilute the "fishy" taste and smell of the latter. Examples are set out hereinafter.

The nutritional supplement may be introduced into the base carried in or on a carrier. The nutritional supplement may be enclosed within a capsule which would typically be water soluble, but could be water dispersible, thus releasing the nutritional supplement once mixed within the aqueous base. The capsule would typically comprise one or more of gum such as acacia gum and arabic gum, methyl cellulose gum, dextrin, gelatine, caseine, milk powder, skimmed milk powder, soya protein, plant protein, legume seed protein. Alternatively, or in addition, the nutritional supplement is carried on a granular, flake or particulate carrier, which is again preferably soluble in the base, and could be one or more of a gum such as acacia gum, gum arabic, dextrin, methyl cellulose gum, gelatine, soya, plant protein, legume seed protein, soya milk, soya milk powder, soya protein, casein, vegetable gum, cellulose, starch, sugar, glucose, maltodextrin.

In certain embodiments the or some of the nutritional supplement can be introduced into the base as one or more saponified oils. Such saponified oils can be produced by reacting the oil or the fatty acid(s) within the oil with an alkaline substance such as potassium hydroxide and/or potassium carbonate. The saponified oil is mixed into the base and the soapy nature helps the mixing of the oil within the typically aqueous base. As the oil is mixed into the base, the typically acidic base reacts to release the fatty acids from the saponified oil and thus realise a good intermixing of the nutritional oil within the base.

In certain embodiments the or one of the nutritional oils in the supplement are provided as fatty acids, typically the nutritionally functional component on the oil(s).

In alternative embodiments of the present disclosure, the immiscible nutritional supplement comprises water insoluble or partially soluble solids, either instead of or in addition to the aforesaid oil and oil-based supplements. Such solids can include minerals, salts, oxides including calcium and/or magnesium salts such as calcium phosphate, di-calcium phosphate, calcium carbonate and calcium sulphate. Minerals such as dolomite and those derived from bones, ancient corals, ancient marine creatures and skeletal deposits can be used. The solids would typically be in fine powder form or another finely divided particulate of sufficiently small size so as not to be detectable during consumption of the composition by way of presenting a powdery or gritty consistency or effect in the mouth of a consumer.

The solid nutritional supplement would be retained or held in the fibrous matrix of the fruit/vegetable matter, which helps to mask the presence of the solid particulates. This also helps to prevent movement of the solids, such as by way of the natural tendency to settle within a liquid medium, thus offering the compositions relatively good storage properties and long shelf lives.

The ability to incorporate insoluble or poorly soluble nutritional supplements such as the aforesaid calcium phosphate and calcium sulphate is advantageous in that not only do they impart additional nutritional and/or health benefits, but they typically exhibit flavour characteristics that are generally considered less unpalatable or adverse than their soluble counterparts, thereby offering less potential for their presence to be noted and to detract from the traditional flavour and attractiveness of the composition for consumption. Such insoluble forms are also typically cheaper than their soluble counterparts and generally have better and more convenient storage properties and are generally more stable against undesirable deterioration.

Such solid nutritional supplements would typically comprise between 0.05% and 5.0% by weight of the composition. The solid nutritional supplements could, in particular embodiments, comprise between 0.4% and 3% by weight of the composition and in others between 0.05% and 1% and in others between 0.1 % and 0.5% by weight of the composition.

The following are specific examples of compositions according to the present disclosure.

### Example 1 Tomato Ketchup with Refined and Deodorised Fish Oil

| **Ingredient** | **Amount (% by weight)** |
|---|---|
| Tomato puree (tomato paste double concentrated) | 26.00 |
| Spirit vinegar | 8.00 |
| Sugar | 20.00 |
| Salt | 4.95 |
| Seasonings and spices | 0.60% |
| Water | 41.01 |
| Fish oil (refined and deodorised) | 0.05% |

### Example 2 Tomato Ketchup with Fish Oil

| **Ingredient** | **Amount (% by weight)** |
|---|---|
| Tomato puree (tomato paste double concentrated) | 25.00 |
| Spirit vinegar | 8.00 |
| Sugar | 20.00 |
| Salt | 3.10 |
| Seasonings and spices | 0.58 |
| Cooking starch | 1.75 |
| Water | 41.17 |
| Fish oil | 0.40 |

The cooking starch would usually be physically and/or chemically modified starch and can be partly or entirely replaced in appropriate quantities by food grade hydrocolloids, embracing thickeners and/or stabilisers, such as but not only xanthan gum, gum tragacanth, guar gum, acacia gum, alginates, carrageenans, compounds and/or derivatives of any of these and reactants such as calcium salts.

### Example 3 Brown Sauce with Fish Oil

| **Ingredient** | **Amount (% by weight)** |
|---|---|
| Water | 28.06 |
| Tomato puree | 7.84 |
| Apple juice concentrate | 1.95 |
| Cane molasses 78% | 9.00 |
| Caramel (colour) | 0.17 |
| Apple puree | 19.64 |
| Cooking starch | 2.50 |
| Seasonings and spices | 1.34 |
| Sugar | 9.00 |
| Malt vinegar | 18.00 |
| Refined deodorised fish oil | 0.40 |

The fish oil can be replaced in whole or in part by algal oil, particularly refined deodorised algal oil (typically rich in Omega 3 fatty acids (DHA type)).

### Example 4 Brown Sauce and Fish Oil

| **Ingredient** | **Amount (% by weight)** |
|---|---|
| Water | 23.00 |
| Tomato puree | 13.80 |
| Apple juice concentrate | 1.95 |
| Cane molasses 78% | 9.00 |
| Caramel (colour) | 0.17 |
| Apple puree | 22.14 |
| Seasonings and spices | 1.34 |
| Sugar | 9.00 |
| Malt vinegar | 18.00 |
| Fish oil (refined and deodorised) | 0.04 |

The fish oil can be replaced in whole or in part by algal oil, particularly refined deodorised algal oil (typically rich in DHA).

In these examples, almost all (about 90%) of the fish oil nutritional supplement was present in droplets less than 30 microns, with 85% to 90% of the droplets being between 5 and 10 microns in diameter.

### Example 5 Tomato Ketchup with Flax Oil and Sweetener

| **Ingredient** | **Amount (% by weight)** |
|---|---|
| Tomato puree | 30 |
| Spirit vinegar | 10 |
| Sugar | 9.2 |
| Salt | 3.1 |
| Sweetener (aspartame) | 0.02 |
| Seasonings and spices | 0.6 |
| Water | 46.08 |
| Flax oil | 1 |

The flax oil can be replaced wholly or partly by one or more other nutritional oils such as algal oil, borage oil, rapeseed oil, canola oil.

### Example 6 Tomato Ketchup with CLA (Tonalin) and Fish Oil

| **Ingredient** | **Amount (% by weight)** |
|---|---|
| Tomato puree | 25 |
| Spirit vinegar | 9 |
| Sugar | 20 |
| Salt | 4 |
| Seasonings and spices | 0.6 |
| Water | 39.7 |
| Deodorised fish oil | 0.2 |
| Tonalin (CLA) | 1.5 |

| | |
|---|---|
| CLA = conjugated linoleic acid | |

Calcium or other non-oil nutritional supplements can be added and the equivalent amount of water deducted from the added water content.

### Example 7 Tomato Ketchup with Micro-Algal Oil and Seed Oil

| **Ingredient** | **Amount (% by weight)** |
|---|---|
| Tomato puree | 22.00 |
| Spirit vinegar (12%) | 9.00 |
| Sugar | 21.00 |
| Salt | 2.10 |
| Chilli powder | 0.02 |
| Garlic powder | 0.01 |
| Modified starch (thickener) | 2.77 |
| Water | 43.06 |
| Micro-algal oil | 0.01 |
| Rapeseed oil | 0.02 |

### Example 8 Tomato Ketchup with Fish Oil and Seed Oil

| **Ingredient** | **Amount (% by weight)** |
|---|---|
| Tomato puree | 22.00 |
| Spirit vinegar 12% | 9.00 |
| Sugar | 21.00 |
| Salt | 2.10 |
| Chilli powder | 0.02 |
| Garlic powder | 0.01 |
| Modified starch (thickener) | 2.77 |
| Water | 43.06 |
| Fish oil | 0.01 |
| Rapeseed oil | 0.02 |

In Examples 7 and 8, the micro-algal and fish oil as sources of Omega 3 fatty acids are complemented by the presence of rapeseed oil, as another source of Omega 3 fatty acids. Micro-algal and fish oils are typically rich in DHA Omega 3 fatty acids. Seed oils such as rapeseed oil are typically rich in EPA Omega 3 fatty acids. The combined use of these Omega 3 fatty acid rich oils gives the product the desired level and composition of nutritional supplement whilst keeping the amount of micro-algal and fish oil to a level at which the typically "fishy" taste and smell characteristics of these oils are not generally detectable by an average consumer.

As indicated hereinbefore, any suitable combination or blend of nutritional oils can be used to achieve the desired nutritional or nutraceutical content in the product along with other desired properties or characteristics of the product such as taste, smell, appearance and the like. By way of example, phytosterol rich oils, such as tall oil, can be used alongside Omega 3 fatty acid rich oils, again where desired to dilute or reduce the presence of oils that have undesirable side-characteristics such as a fishy taste and/or smell.

The present disclosure also provides a method of manufacturing an edible composition, the method comprising dispersing a water immiscible nutritional supplement in a base comprising fruit and/or vegetable matter with a fibrous matrix to retain the nutritional supplement within the structure of the fibrous matrix.

It has been found that such compositions can benefit from being manufactured with most if not all of the ingredients of the composition provided in the base, to which the nutritional supplement is then added. This can have advantage where the nutritional supplement is added as a liquid, and particularly as a liquid comprising oil. Ideally, the oil droplet size in the composition is no smaller than 5 microns and preferably the droplet size is predominantly in the range of 5 to 30 microns, although in certain embodiments between about 70% and 90% of the nutritional supplement is present in droplet sizes of between 5 and 10 microns. This helps to mitigate against the introduction of a milky or other undesirable visual effect to the composition as a result of the oil droplets becoming sufficiently small that they start to scatter incidental light.

A mechanised mixer such as a turbine-type motorised mixer like a Silverson mixer has been found suitable to mix the various components together to produce compositions of the present disclosure. Other suitable mixers can be used, such as rotating blade(s) mixers, whisks, pressure jet mixers, in-line or pipeline connected mixers. Manually/hand operated devices can be used, particularly when relatively small amounts of composition are to be made.

This advantage is particularly seen where the base is relatively viscous, such as where thickeners or stabilisers are provided, as may be the case for example in tomato ketchup and similar such sauces.

Adding thickeners and stabilisers is generally advantageous, as they can work with the fibrous matrix to hinder the movement of the nutritional supplement within the base and thus help with the stability and shelf life of the product.

Additional edible fibre and/or hydrocolloid, in particular plant derived fibre and hydrocolloid, can be used to provide stabilisation and/or thickening of the composition to give the product the desired texture. Divalent anion soluble salts such as calcium chloride, magnesium sulphate and calcium gluconate can be added to help cross-link certain hydrocolloids such as some pectins in the composition to increase the thickening and/or gelling properties.

In certain embodiments the nutritional supplement is introduced to the base in the form of an oil-and-water emulsion, which would optionally be stabilised with one or more emulsifiers. The or each emulsifier would generally be chosen from known emulsifiers for foodstuff usage, and would be selected to requirements by the person skilled in the art.

The oil of the emulsion can in certain embodiments consist of the whole or substantially the whole of the nutritional oil of the supplement. In alternative embodiments the oil of the emulsion consists of nutritional oil plus a further oil, such as one or more plant and/or animal (including fish and algae) derived oils.

In embodiments where the nutritional supplement is not oil or oil-based, the oil of the emulsion can comprise a carrier oil such as one or more plant and/or animal (including fish and algae, including microalgal) derived oils.

In certain embodiments the nutritional supplement may be introduced to the base in alcohol or in an alcohol-based solution. The alcohol or alcohol-based solution can comprise any suitable food grade alcohol(s), including ethyl alcohol, propanol, iso-propanol, glycerol, ethyl glycol, polyol and others in their natural, modified, and/or synthetic form.

In certain embodiments the fruit and/or vegetable to be used in the base is enzyme deactivated, such as by heat treatment. This can help to prevent or hinder undesirable degradation of the fruit/vegetables during storage and/or manufacture of the composition and moreover, certain fruits/vegetables such as tomatoes generally develop better more desirable textures, giving a thicker product that may not require the addition of thickeners or stabilisers, whilst still offering the composition a traditional texture and mouth feel for a tomato sauce. Where the composition is manufactured using prepared pulp materials such as tomato concentrate, tomato paste and/or tomato puree, these are preferably heat treated to facilitate storage.

As indicated previously, the nutritional supplement can be introduced on or in a carrier, such as within a capsule and/or on or in a particulate or granular carrier that is soluble within the base. Such carriers may comprise gelatine, gums, such as acacia gum, gum arabic, methyl cellulose gum, dextrin, soluble cellulose, starch, sugar, glucose, maltodextrin, milk or milk protein (casein), soya protein, plant protein or suchlike.

The nutritional supplement may be added to the base as an admix or premix of supplement and carrier substrate as a solution, suspension (such as a suspension of fine powder acidulated caseine encapsulated nutritional oil) and/or as an emulsion (such as an emulsion of nutritional oil or diluted nutritional oil emulsified in an aqueous medium).

Introducing the nutritional supplement on a carrier or encapsulated can further help to reduce the apparent presence of the supplement within the composition. For nutritional supplements that typically have an odour and/or taste, such as fish oil or supplements derived from fish oil, algal oil and/or Omega 3 rich plant derived oils such as flax oil or other nutritional oils such as borage oil, blackcurrant oil, masking the inherent odour and/or taste in this way can be beneficial.

As indicated previously, the nutritional oil can be added in saponified form or as the functional fatty acid component of the oil.

For particular nutritional supplements, such as Omega 3 rich oil, they are believed to oxidise rapidly upon contact with air/oxygen and the compositions of the present disclosure can benefit from the addition of antioxidants to help to offset or counteract such oxidative properties. Antioxidants could include Vitamin E (tocopherol), ascorbyl palmitate, BHA, BHT, BHQ, ascorbic acid and/or its compounds, ascorbic palmitate and others as generally used in the manufacture of foodstuffs.

The method of manufacture may also involve treatment of the composition to remove dissolved oxygen in the composition, to help minimise the oxidative effect of this and thus help to prevent undesirable deterioration of the composition, in particular the oils therein. This may also help prevent the development of a cloudy appearance to the product and potential disturbance of the nutritional supplement by the air gradually tending to ascend to the surface of the base taking the nutritional supplement, particularly oily supplements, with it. Such treatment may include heating, vacuum treatment and/or flushing with a suitable gas and/or often less desirably steam.

The method may also involve the addition of one or more substances that act to lower the temperature at which the nutraceutical oils start to solidify or partially solidify in the composition. This would be particularly useful for oils which tend to solidify or partially solidify at temperatures in the range 0°C to 30°C, such as concentrated conjugated linoleic acids. Such additive substances could include medium chain triglycerides (for example a fraction from palm oil), sunflower oil and other oils usually liquid at temperatures at least in the range 7°C to 50°C.

In certain embodiments the compositions of the present disclosure can be manufactured to be relatively low in sugars and sodium perhaps by replacing any added sugars and/or salt with sweetener and/or salt substitutes such as potassium chloride. Taste improvers, bitterness inhibitors and/or acidity inhibitors may be used.

It will be appreciated that within the context of the present disclosure, the nutritional supplement can be used in any appropriate form, including its natural state, in modified form and indeed analogues can be used, and these can be used singly or in combination.

## Claims

1. An edible composition comprising tomato ketchup, the edible composition having a base comprising fruit and/or vegetable matter with a fibrous matrix and a water immiscible nutritional supplement held within the fibrous matrix, the nutritional supplement comprising an oil, the oil being rich in Omega 3 fatty acids, wherein the nutritional supplement is in the form of droplets, the majority of which have an external diameter of less than 30 microns.

2. An edible composition as claimed in claim 1, in which the fibrous matrix is plant-derived, the fibrous matrix may comprise natural insoluble fibres from fruit and/or vegetables, or one or more of primarily cellulose, hemicelluloses, lignin, soluble fibres, pectin, gum, non-starch polysaccharides, oligosaccharides.

3. An edible composition as claimed in claims 1 or 2, in which the base is aqueous.

4. An edible composition as claimed in any preceding claim, in which the base comprises matter suspended in an aqueous liquid.

5. An edible composition as claimed in claim 4, in which the aqueous liquid comprises the juice of one or more different fruit(s) and/or vegetable(s).

6. An edible composition as claimed in any preceding claim, in which the matter comprises one or more of pulped, comminuted, mashed, blended, crushed, mushed, shredded, natural state, cored, de-seeded, pre-pureed and/or grated fruit(s) and/or vegetable(s).

7. An edible composition as claimed in any of claims 4 to 6, in which the base comprises the pulp of one or more fruit(s) and/or vegetables suspended in the aqueous liquid.

8. An edible composition as claimed in any preceding claim, in which one or more of the fruits/vegetables is heat treated to reduce or deactivate enzyme activity.

9. An edible composition as claimed in any preceding claim, in which the base comprises additives such as one or more of water, antioxidants (such as Vitamin E (tocopherol), ascorbyl palmitate, BHA, BHT, BHQ, ascorbic acid and/or its salts), preservatives, flavourings, seasonings, colourants, sweeteners, acidity regulators, thickeners, stabilisers, chelating agent, vitamins, Vitamin C, vinegars, acidity regulators, salt, sugar (raw, refined and/or partly refined), fructose, fructose syrup, inulin, oligofructose, polysaccharides, glucose, molasses, fruit juice concentrates.

10. An edible composition as claimed in any preceding claim, in which the composition is liquid or semi-liquid.

11. An edible composition as claimed in any preceding claim, in which the nutritional supplement comprises one or more of a nutritional, functional and/or nutraceutical oil or one or more oils and/or oily substances containing nutritional, functional and/or nutraceutical agents, unsaturated or partly unsaturated fatty acids, in particular polyunsaturated fatty acids, conjugated linoleic acid (CLA) and its isomers, partly saturated fatty acids, fatty acid esters, oils and/or oily substances derived from one or more of plant sources (such as linseed, hemp, rapeseed, tall, sesame, flax, chia, safflower, wood oil CLA, pine oil CLA, rice, wheat, soya (and soya germ), other seeds, animal sources (such as fish, krill) or other organism sources (such as algae, micro-algae), L-carnitine, or one or more of phytosterols (including their esters), phytostanols (including their esters), mineral supplements, organomineral supplements, organometal supplements, antioxidants and suchlike.

12. An edible composition as claimed in any preceding claim, in which the composition comprises one or more substances that act to reduce the natural melting temperature of the nutritional supplement, including one or more of medium chain triglycerides and/or sunflower oil within the composition to act to reduce the melting point of the nutritional supplement, particularly oil-based nutritional supplements, which otherwise would be waxy or solid at normal usage temperature at least in the range of 10°C to 25°C approximately.

13. An edible composition as claimed in any preceding claim, in which the nutritional supplement is present on or in a carrier substrate, which carrier substrate is water soluble or water dispersible.

14. A method of manufacturing an edible composition comprising tomato ketchup, the method comprising dispersing a water immiscible nutritional supplement comprising an oil, the oil being rich in Omega 3 fatty acids, in a base comprising fruit and/or vegetable matter with a fibrous matrix to retain the water immiscible nutritional supplement within the structure of the fibrous matrix, wherein the nutritional supplement is dispersed within the composition to form droplets, the vast majority of droplets having a diameter of less than 30 microns.

15. A method as claimed in claim 14, in which thickener and/or stabiliser is mixed in the base prior to dispersion of the nutritional supplement to the base.

## Patentansprüche

1. Essbare Zusammensetzung, umfassend Tomatenketchup, wobei die essbare Zusammensetzung eine Basis hat, die ein Frucht- und/oder Gemüsematerial mit einer faserigen Matrix und ein mit Wasser nicht mischbares Nahrungsergänzungsmittel umfasst, das innerhalb der faserigen Matrix gehalten wird, wobei das Nahrungsergänzungsmittel ein Öl umfasst, das reich an Omega-3-Fettsäuren ist, wobei das Nahrungsergänzungsmittel in der Form von Tröpfchen vorliegt, von denen die meisten einen äußeren Durchmesser von weniger als 30 Mikrometer haben.

2. Essbare Zusammensetzung gemäß Anspruch 1, wobei die faserige Matrix aus Pflanzen stammt, wobei die faserige Matrix natürliche unlösliche Fasern aus Früchten und/oder Gemüse oder eines oder mehrere von primär Cellulose, Hemicellulosen, Lignin, löslichen Ballaststoffen, Pektin, Gummi, Nicht-Stärke-Polysacchariden und Oligosacchariden umfasst.

3. Essbare Zusammensetzung gemäß Anspruch 1 oder 2, wobei die Basis wässrig ist.

4. Essbare Zusammensetzung gemäß einem der vorangehenden Ansprüche, wobei die Basis Material umfasst, das in einer wässrigen Flüssigkeit suspendiert ist.

5. Essbare Zusammensetzung gemäß Anspruch 4, wobei die wässrige Flüssigkeit den Saft einer oder mehrerer verschiedener Früchte und/oder Gemüse umfasst.

6. Essbare Zusammensetzung gemäß einem der vorangehenden Ansprüche, wobei das Material eine oder mehrere zerdrückte, zerkleinerte, pürierte, vermischte, gebrochene, zermatschte, zerfetzte, naturbelassene, ausgestochene, entkernte, vorpürierte und/oder geriebene Früchte und/oder Gemüse umfasst.

7. Essbare Zusammensetzung gemäß einem der Ansprüche 4 bis 6, wobei die Basis den Brei einer oder mehrerer Früchte und/oder Gemüse umfasst, der in der wässrigen Flüssigkeit suspendiert ist.

8. Essbare Zusammensetzung gemäß einem der vorangehenden Ansprüche, wobei eine oder mehrere der Früchte/Gemüse wärmebehandelt ist, um die Enzymaktivität zu reduzieren oder zu deaktivieren.

9. Essbare Zusammensetzung gemäß einem der vorangehenden Ansprüche, wobei die Basis Additive umfasst, wie eines oder mehr von Wasser, Antioxidationsmitteln (wie Vitamin E (Tocopherol), Ascorbylpalmitat, BHA, BHT, BHQ, Ascorbinsäure und/oder deren Salze), Konservierungsmitteln, Aromastoffen, Gewürzen, Farbstoffen, Süßstoffen, Säureregulatoren, Verdickungsmitteln, Stabilisatoren, Chelatbildnern, Vitaminen, Vitamin C, Essigen, Säureregulatoren, Salz, Zucker (roh, raffiniert und/oder teilweise raffiniert), Fruktose, Fruktosesirup, Inulin, Oligofruktose, Polysacchariden, Glukose, Melasse und Fruchtsaftkonzentraten.

10. Essbare Zusammensetzung gemäß einem der vorangehenden Ansprüche, wobei die Zusammensetzung flüssig oder halbflüssig ist.

11. Essbare Zusammensetzung gemäß einem der vorangehenden Ansprüche, wobei das Nahrungsergänzungsmittel ein oder mehrere Ernährungs-, Funktions- und/oder Nahrungsergänzungsmittel-Öle oder ein oder mehrere Öle und/oder ölige Substanzen, enthaltend Ernährungs-, Funktions- und/oder Nahrungsergänzungsmittel-Agenzien, ungesättigte oder teilweise ungesättigte Fettsäuren, insbesondere mehrfach ungesättigte Fettsäuren, konjugierte Linolsäure (CLA) und deren Isomere, teilweise gesättigte Fettsäuren, Fettsäureester, Öle und/oder ölige Substanzen, die abgeleitet sind von einer oder mehreren Pflanzenquellen (wie Leinsamen, Hanf, Raps, Kiefer (Tall), Sesam, Flachs, Chia, Distel, Holzöl-CLA, Pinienöl-CLA, Reis, Weizen, Soja (und Sojakeime) andere Samen, tierische Quellen (wie Fisch, Krill) oder andere Organismus-Quellen (wie Algen, Mikroalgen), L-Carnitin oder ein oder mehrere Phytosterine (einschließlich deren Ester), Phytostanole (einschließlich deren Ester), Mineralzusätze, Organomineralzusätze, Organometallzusätze, Antioxidationsmittel und dergleichen umfasst.

12. Essbare Zusammensetzung gemäß einem der vorangehenden Ansprüche, wobei die Zusammensetzung eine oder mehrere Substanzen umfasst, die bewirken, dass die natürliche Schmelztemperatur des Nahrungsergänzungsmittels reduziert wird, einschließlich ein oder mehrere mittelkettige Triglyceride und/oder Sonnenblumenöl innerhalb der Zusammensetzung, um zu bewirken, dass der Schmelzpunkt des Nahrungsergänzungsmittels, insbesondere ölbasierter Nahrungsergänzungsmittel reduziert wird, die ansonsten wachsartig oder fest wären bei normaler Gebrauchstemperatur mindestens im Bereich von ungefähr 10°C bis 25°C.

13. Essbare Zusammensetzung gemäß einem der vorangehenden Ansprüche, wobei das Nahrungsergänzungsmittel auf oder in einem Trägersubstrat vorliegt, wobei das Trägersubstrat wasserlöslich oder wasserdispergierbar ist.

14. Verfahren zur Herstellung einer essbaren Zusammensetzung, umfassend Tomatenketchup, wobei das Verfahren umfasst:
Dispergieren eines mit Wasser nicht mischbaren Nahrungsergänzungsmittels, das ein Öl umfasst, welches reich an Omega-3-Fettsäuren ist, in einer Basis, die ein Frucht- und/oder Gemüsematerial mit einer faserigen Matrix umfasst, um das mit Wasser nicht mischbare Nahrungsergänzungsmittel innerhalb der Struktur der faserigen Matrix zu halten, wobei das Nahrungsergänzungsmittel innerhalb der Zusammensetzung dispergiert ist, um Tröpfchen zu bilden, wobei die überwiegende Mehrheit der Tröpfchen einen äußeren Durchmesser von weniger als 30 Mikrometer hat.

15. Verfahren gemäß Anspruch 14, wobei das Verdickungsmittel und/oder der Stabilisator in die Basis gemischt wird vor Dispergieren des Nahrungsergänzungsmittels in der Basis.

## Revendications

1. Composition comestible comprenant du ketchup, la composition comestible comportant une base comprenant de la matière issue de fruits et / ou de légumes avec une matrice fibreuse et un complément nutritionnel non miscible à l'eau contenu à l'intérieur de la matrice fibreuse, le complément nutritionnel comprenant une huile, l'huile étant riche en acides gras oméga 3, dans lequel le complément nutritionnel est sous la forme de gouttelettes, dont la plupart ont un diamètre extérieur inférieur à 30 microns.

2. Composition comestible selon la revendication 1, dans lequel la matrice fibreuse est d'origine végétale, la matrice fibreuse peut comprendre des fibres insolubles naturelles issues de fruits et / ou de légumes, ou un ou plusieurs des éléments parmi principalement la cellulose, les hémicelluloses, la lignine, les fibres solubles, la pectine, la gomme, les polysaccharides non amylacés, les oligosaccharides.

3. Composition comestible selon la revendication 1 ou 2, dans lequel la base est aqueuse.

4. Composition comestible selon l'une quelconque des revendications précédentes, dans lequel la base comprend de la matière en suspension dans un liquide aqueux.

5. Composition comestible selon la revendication 4, dans lequel le liquide aqueux comprend le jus d'un ou plusieurs fruit (s) et / ou de légume (s) différent (s).

6. Composition comestible selon l'une quelconque des revendications précédentes, dans laquelle la matière comprend un ou plusieurs éléments parmi des fruit (s) et / ou légume (s) en pulpe, broyés, écrasés, mélangés, concassés, en bouillie, déchiquetés, à l'état naturel, évidés, dégrainés, en pré-purée et / ou râpés.

7. Composition comestible selon l'une quelconque des revendications 4 à 6, dans lequel la base comprend la pulpe d'un ou plusieurs fruits (s) et / ou légumes en suspension dans le liquide aqueux.

8. Composition comestible selon l'une quelconque des revendications précédentes, dans lequel un ou plusieurs des fruits / légumes est / sont traité (s) thermiquement pour réduire ou désactiver l'activité enzymatique.

9. Composition comestible selon l'une quelconque des revendications précédentes, dans lequel la base comprend des additifs tels qu'un ou plusieurs des additifs suivants : l'eau, les antioxydants (tels que la vitamine E (tocophérol), le palmitate d'ascorbyle, l'hydroxyanisol butylé, le butylhydroxytoluène, la butyllrydroquinone, l'acide ascorbique et / ou ses sels), les conservateurs, les arômes, les assaisonnements, les colorants, les édulcorants, les régulateurs d'acidité, les épaississants, les stabilisants, les agents chélateurs, les vitamines, de la vitamine C, les vinaigres, les régulateurs d'acidité, le sel, le sucre (brut, raffinés et / ou partiellement raffiné), le fructose, le sirop de fructose, l'inuline, l'oligofructose, les polysaccharides, le glucose, la mélasse, les concentrés jus de fruits.

10. Composition comestible selon l'une quelconque des revendications précédentes, dans laquelle la composition est liquide ou semi-liquide.

11. Composition comestible selon l'une quelconque des revendications précédentes, dans lequel le complément nutritionnel comprend un ou plusieurs des éléments parmi une huile alimentaire, fonctionnelle et / ou nutraceutique ou une ou plusieurs huiles et / ou des substances huileuses qui contiennent des agents nutritionnels, fonctionnels et / ou nutraceutiques, des acides gras insaturés ou partiellement insaturés, en particulier des acides gras polyinsaturés, un acide linoléique conjugué ("Conjugated linoleic Acid" - CLA) et ses isomères, des acides gras partiellement saturés, des esters d'acides gras, des huiles et / ou des substances huileuses dérivées d'une ou plusieurs sources végétales (telles que les graines lin, de chanvre, les graine de colza, de tall, de sésame, de lin, de chia, de carthame, le CLA d'huile de bois, le CLA d'huile de pin, de riz, de blé, de soja (et de germe de soja), d'autres graines), de sources animales (telles que le poisson, le krill) ou d'autres sources d'organismes (telles que les algues, les microalgues), la L-carnitine, ou un ou plusieurs des éléments parmi les phytostérols (y compris leurs esters), les phytostanols (y compris leurs esters), les compléments minéraux, les compléments organo-minéraux, les compléments organométalliques, les antioxydants et autres produits analogues.

12. Composition comestible selon l'une quelconque des revendications précédentes, dans lequel la composition comprend une ou plusieurs substances qui agissent pour réduire la température de fusion naturelle du complément nutritionnel, comprenant une ou plusieurs substances parmi les triglycérides à chaîne moyenne et / ou l'huile de tournesol dans la composition pour agir pour réduire le point de fusion du complément nutritionnel, en particulier des suppléments nutritionnels à base d'huile, qui, autrement, seraient cireux ou solides à une température normale d'utilisation, au moins dans la plage allant de 10 ° C à 25 ° C environ.

13. Composition comestible selon l'une quelconque des revendications précédentes, dans lequel le complément nutritionnel est présent sur ou dans un substrat de support, lequel substrat de support est hydrosoluble ou dispersable dans l'eau.

14. Procédé de fabrication d'une composition comestible comprenant du ketchup, le procédé comprenant la dispersion d'un complément nutritionnel non miscible à l'eau comprenant une huile, l'huile étant riche en acides gras oméga-3, dans une base comprenant de la matière issue de fruits et / ou de légumes avec une matrice fibreuse pour retenir le complément nutritionnel non miscible à l'eau à l'intérieur de la structure de la matrice fibreuse, dans lequel le complément nutritionnel est dispersé dans la composition pour former des gouttelettes, la plupart des gouttelettes ayant un diamètre inférieur à 30 microns.

15. Procédé selon la revendication 14, dans laquelle l'épaississant et / ou le stabilisant sont mélangés dans la base avant la dispersion du complément nutritionnel à la base.
